# FASCICULE DE BREVET EUROPEEN

(11) **EP 1 067 002 B1**
(45) Date de publication et mention de la délivrance du brevet: **28.05.2003**
(21) Numéro de dépôt: 00460040.9
(22) Date de dépôt: 03.07.2000
(51) Int. Cl.: B60K 6/02

(54) **Boîte de vitesses mécanique en ligne, pour véhicule à propulsion hybride**
Parallelwellengetriebe für Fahrzeuge mit Hybridantrieb
Parallel-shaft transmission for vehicles with hybrid propulsion

(30) Priorité: 06.07.1999 FR 9909028
(43) Date de publication de la demande: 10.01.2001
(73) Titulaire: Peugeot Citroen Automobiles SA, 92200 Neuilly sur Seine (FR)
(72) Inventeur: Petiot, Jean-Paul, 91460 Marcoussis (FR)
(74) Mandataire: Le Faou, Daniel

(56) Documents cités:
- EP-A- 0 845 618
- DE-A- 3 230 121
- FR-A- 2 699 127
- GB-A- 993 185
- US-A- 5 603 242
- PATENT ABSTRACTS OF JAPAN vol. 1998, no. 13, 30 novembre 1998 (1998-11-30) & JP 10 217779 A (TOYOTA MOTOR CORP), 18 août 1998 (1998-08-18)

## Description

La présente invention concerne une boîte de vitesses mécanique en ligne, pour un véhicule à propulsion hybride, selon le préambule de la revendication 1 (connue du document JP-A-10 217 779).

Par l'expression «propulsion hybride», on entendra dans la présente description, et dans les revendications qui suivent, une propulsion qui est réalisée à partir d'un moteur thermique et/ou d'un moteur électrique, le véhicule étant équipé de ces deux types de moteur.

La boîte de vitesses qui fait l'objet de l'invention est du type comportant des lignes primaire et secondaire parallèles, à savoir une ligne primaire motrice et une ligne secondaire réceptrice du mouvement, laquelle entraîne un différentiel qui commande à son tour les roues motrices du véhicule.

L'objectif de l'invention est de proposer une boîte de vitesses du type ci-dessus indiqué, qui soit d'une conception relativement simple et compacte, et qui permette de développer un couple adapté aux conditions de circulation du véhicule, en particulier à la vitesse voulue, ceci en utilisant comme source motrice l'un et/ou l'autre des deux moteurs.

Cet objectif est atteint, conformément à l'invention, grâce au fait que :
- la ligne primaire est constituée d'un arbre menant principal entraîné en rotation par le moteur thermique via un embrayage et d'un arbre menant auxiliaire tubulaire qui entoure coaxialement l'arbre menant principal et qui est entraîné par le moteur électrique, ces deux arbres étant mutuellement libres en rotation ;
- l'arbre menant principal porte au moins une paire de pignons de diamètres différents, dont il est solidaire en rotation ;
- l'arbre menant auxiliaire porte au moins une paire de pignons de diamètres différents, dont il est solidaire en rotation ;
- la ligne secondaire est constituée d'un arbre mené principal et d'un arbre mené auxiliaire tubulaire, entourant coaxialement l'arbre mené principal, chacun de ces deux arbres menés portant un pignon de sortie qui est en prise avec la denture de la couronne du différentiel ;
- l'arbre mené principal comporte au moins une paire de pignons fous qui sont chacun en prise avec l'un des pignons de l'arbre menant principal, un baladeur permettant de solidariser sélectivement en rotation l'un de ces pignons fous avec l'arbre mené principal ;
- l'arbre mené auxiliaire comporte au moins une paire de pignons fous qui sont chacun en prise avec l'un des pignons de l'arbre menant auxiliaire, un baladeur permettant de solidariser sélectivement l'un de ces pignons fous avec l'arbre mené auxiliaire.

D'autres caractéristiques et avantages de l'invention apparaîtront de la description qui va suivre, en référence aux dessins annexés, qui représentent un mode de réalisation préféré de l'objet de cette invention.

Sur les dessins :
- la figure 1 est une vue générale, très schématique, de la boîte de vitesses ;
- les figures 2 et 3 sont des vues partielles, analogues à la vue de la figure 1, destinées à montrer deux modes d'entraînement possibles du différentiel, respectivement à l'aide du moteur thermique et à l'aide du moteur électrique ; sur ces deux figures, les différents organes d'entraînement qui ne sont pas sollicités dans la configuration illustrée n'ont pas été représentés, afin de ne pas alourdir inutilement les figures.

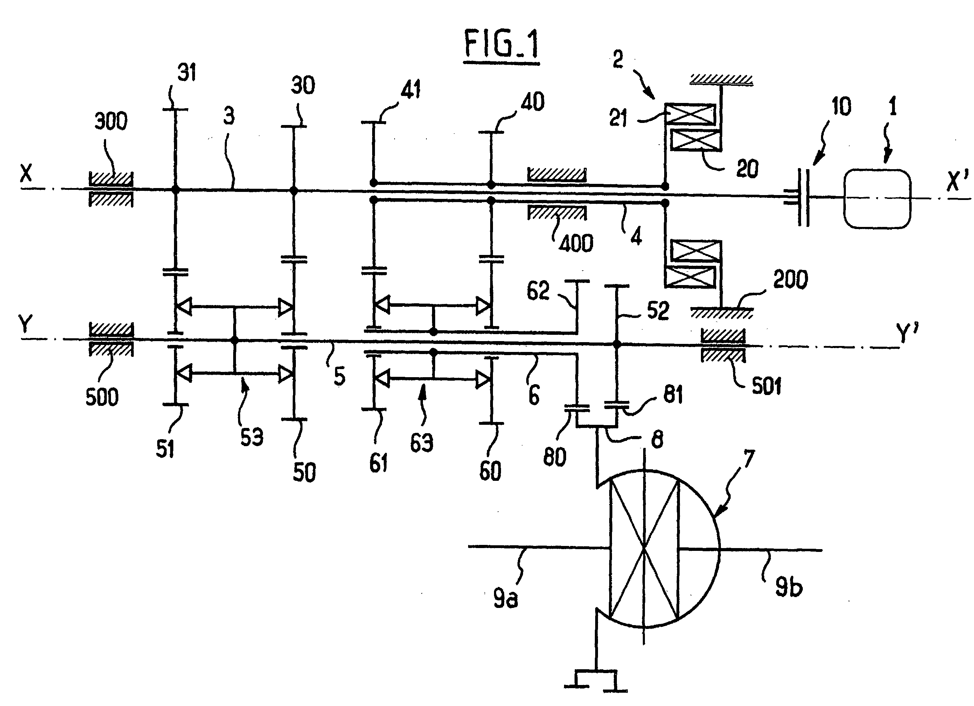

Sur la figure 1, on a désigné par les références **XX'** et **YY'** les lignes primaire et, respectivement, secondaire de la boîte de vitesses mécanique en ligne. Il s'agit d'une boîte à deux vitesses thermiques et deux vitesses électriques, cette solution n'étant qu'un exemple de combinaison parmi de nombreuses possibles. Plus de deux vitesses thermiques, notamment, sont avantageusement prévues.

Ces deux lignes sont parallèles, disposées à proximité l'une de l'autre.

Dans l'exemple illustré, la ligne **XX'** est placée au dessus de la ligne **YY'.**

Le moteur thermique, qui est par exemple un moteur à quatre temps, à essence ou du type Diesel, est référencé 1.

Le moteur électrique est référencé 2, son stator (central) et son rotor (annulaire) présentant des bobinages référencés respectivement 20 et 21.

La ligne primaire **XX'** est constituée d'une paire d'arbres, dits menants, à savoir un arbre principal 3 et un arbre auxiliaire tubulaire 4.

L'arbre 3 est entraîné en rotation par le moteur thermique 1, ceci par l'intermédiaire d'un embrayage 10 de type connu.

Dans sa portion d'extrémité qui est opposée à l'extrémité comportant l'embrayage 10, cet arbre 3 possède une paire de pignons de diamètres différents 30, 31.

L'axe du moteur électrique 2 coïncide avec la ligne XX', le rotor 21 entourant le stator 20 qui lui-même entoure coaxialement l'arbre 3 qui le traverse.

Avantageusement, le stator 20 est solidaire d'une partie fixe 200 constitutive du carter de l'embrayage 10.

Le moteur électrique est donc contenu dans ce carter.

L'arbre creux auxiliaire 4 est traversé par l'arbre principal 3 et est libre en rotation par rapport à ce dernier.

L'arbre 4 est notablement plus court que l'arbre 3, celui-ci dépassant largement à ses deux extrémités, d'un côté par la portion équipée de l'embrayage 10, de l'autre par la portion munie des pignons 30, 31.

L'arbre tubulaire 4 est solidaire à l'une de ses extrémités du rotor 21.

Dans sa portion d'extrémité opposée, cet arbre 4 porte une paire de pignons 40, 41 de diamètres différents, analogues aux pignons 30, respectivement 31 précités.

Chaque pignon est immobilisé sur son arbre porteur, aussi bien en rotation qu'en translation.

Des organes appropriés, tels que des paliers de roulement référencés 300, 400, assurent le guidage en rotation des deux arbres 3, 4 de la ligne primaire.

Dans l'exemple illustré, le palier 300 réalise le guidage d'une extrémité de l'arbre 3, du côté opposé à l'embrayage, tandis que le palier 400 assure le guidage de l'arbre tubulaire 4 dans sa portion comprise entre le moteur 2 et la paire de pignons 40, 41. L'arbre 4 est lui-même guidé en rotation sur l'arbre central 3, si bien que les deux arbres 3, 4 sont parfaitement guidés en rotation.

Des moyens appropriés, non représentés, assurent également l'immobilisation axiale de chacun de ces deux arbres.

De manière tout à fait similaire, la ligne secondaire **YY'** est composée d'une paire d'arbres, dits menés, à savoir un arbre principal 5 et un arbre auxiliaire tubulaire 6, plus court, qui l'entoure, et est guidé en rotation sur ce dernier.

Des paliers d'extrémité appropriés 500, 501 assurent le guidage en rotation de l'arbre 5.

L'arbre mené principal 5 porte une paire de pignons 50, 51, qui sont chacun en prise avec un pignon 30, respectivement 31.

De manière analogue, l'arbre tubulaire 6 porte une paire de pignons 60, 61 qui sont en prise avec les pignons 40, respectivement 41.

Les pignons 50, 51 sont normalement montés fous sur l'arbre 5.

Cependant, il est prévu un baladeur 53, interposé entre ces deux pignons, et solidaire en rotation de l'arbre 5.

Par déplacement du baladeur 53, dans un sens ou dans l'autre, suivant la direction longitudinale **YY'**, il est possible de solidariser en rotation ce baladeur 53 et, corrélativement, l'arbre 5, avec l'un des deux pignons 50 ou 51, ceci de manière sélective.

De la même manière, les pignons 60, 61 sont tous deux montés fous sur l'arbre tubulaire auxiliaire 6 ; un baladeur 63 disposé entre les deux pignons permet de les solidariser sélectivement avec l'arbre 6.

La portion d'extrémité de la ligne secondaire **YY'** comporte, du côté des moteurs 1, 2, une paire de pignons 52, 62, qui sont solidaires aussi bien en rotation qu'en translation des arbres 5 et, respectivement, 6.

Les pignons 30, 40, 51 et 61 ont sensiblement le même diamètre.

Les pignons 31, 41, 50, 60 ont également sensiblement le même diamètre, supérieur au diamètre des pignons précédents.

Bien entendu, la somme des rayons de deux pignons en prise correspond à la valeur d'entraxe des deux lignes **XX', YY'.**

Le pignon 62 a un diamètre voisin de celui des pignons 51, 61 ; le pignon 52 a un diamètre légèrement plus petit que le pignon 62. Bien entendu, on pourrait adopter une disposition inverse, le pignon 62 étant plus petit que le pignon 52.

De manière connue, le différentiel 7 entraîne deux demi-essieux 9a, 9b, qui portent chacun l'une des roues motrices du véhicule.

Le différentiel possède une couronne 8 à deux pignons 80, 81, qui engrènent respectivement avec les pignons 62, 52 précités.

Les paires de pignons 30-50 et 31-51 correspondent, respectivement, aux rapports de première et de seconde vitesses thermiques ; les paires de pignons 40-60 et 41-51 correspondent, respectivement, aux rapports de première et de seconde vitesses électriques.

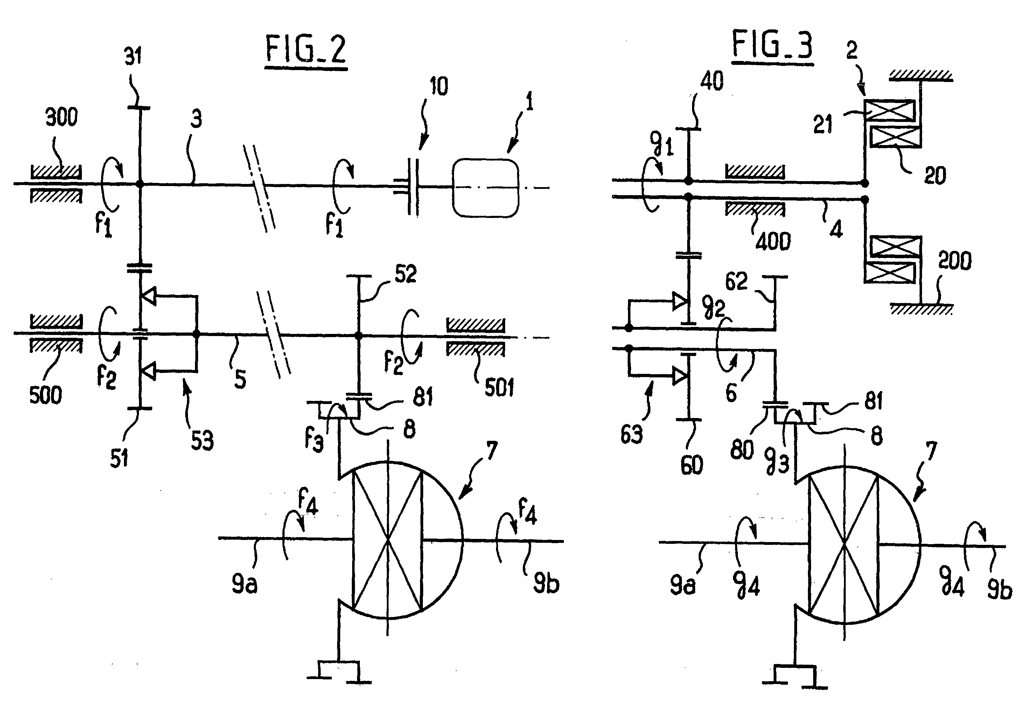

La figure 2 représente la chaîne cinématique d'entraînement de la couronne de différentiel 8 à l'aide du moteur thermique.

Pour cela, l'embrayage 10 étant activé (position embrayée), le moteur 1 entraîne en rotation l'arbre primaire principal 3, comme symbolisé par les flèches **f**_{**1**}**.**

Les pignons 30, 31 sont également mus en rotation, entraînant à leur tour les pignons fous 51, 50.

Selon le rapport de démultiplication souhaité, on actionne le baladeur 53 de telle manière que l'un ou l'autre des deux pignons 50, 51 soit rendu solidaire en rotation de l'arbre mené 5.

Dans l'exemple illustré, c'est le pignon 51 qui est ainsi solidarisé.

Par suite de sa rotation, il entraîne donc l'arbre 5 en rotation, comme symbolisé par les flèches **f**_{**2**}, ce sens de rotation étant contraire du sens **f**_{**1**}**.**

Le pignon 52, solidaire de l'arbre 5, est par conséquent entraîné en rotation suivant **f**_{**2**}, et communique son mouvement à la couronne 8, ceci par l'intermédiaire de la denture du pignon 81 avec laquelle il est en prise. Ce mouvement, symbolisé par la flèche **f**_{**3**}**,** est transmis aux demi-essieux 9a, 9b au moyen du mécanisme du différentiel, comme symbolisé par les flèches **f**_{**4**}**.**

Un entraînement similaire à partir du moteur thermique, mais avec un rapport de vitesses différent, peut être obtenu en commandant le baladeur 53 pour qu'il vienne craboter le pignon 50 en lieu et place du pignon 51.

La figure 3 représente la chaîne cinématique d'entraînement de la couronne de différentiel 8 à partir du moteur électrique 2.

La rotation du rotor 21 est transmise à l'arbre creux 4, comme symbolisé par la flèche **g**_{**1**}**,** entraînant en rotation la paire de pignons 40, 41.

Dans l'exemple illustré, le baladeur 63 assure la solidarisation en rotation du pignon 60, lequel engrène avec le pignon 40, et de l'arbre mené tubulaire 6. La rotation de cet arbre, ainsi que la rotation conjointe du pignon 62 dont il est solidaire, sont symbolisés par la flèche **g**_{**2**}**.**

C'est donc le pignon 62 qui entraîne la couronne 8 du différentiel, comme symbolisé par la flèche **g**_{**3**}**,** ceci par l'intermédiaire de la denture du pignon 80.

Ce mouvement est transmis aux essieux moteurs, comme symbolisé par les flèches **g**_{**4**}**.**

Bien entendu, le rapport de démultiplication de cet entraînement électrique peut également être modifié en faisant craboter le baladeur 63 avec l'autre pignon 61 (non représenté sur la figure 3).

Grâce à cette boîte de vitesses, on peut par exemple démarrer en mode électrique, en utilisant la première vitesse 40-60, l'embrayage 10 étant inactivé (position de débrayage), ceci pour ne pas entraîner le moteur thermique.

Ensuite, par exemple lorsque la vitesse du véhicule a atteint une valeur comprise entre 10 et 50 km à l'heure, on crabote une vitesse thermique puis on embraye le mécanisme 10 afin de démarrer le moteur thermique qui peut à son four devenir propulseur.

A tout moment, pour de fortes accélérations, on peut additionner les couples des deux moteurs, thermique et électrique.

On peut passer ensuite la deuxième vitesse thermique (mise en oeuvre des pignons 31 et 51) tout en conservant la première vitesse électrique pour ne pas avoir de rupture brutale du couple, et ensuite passer la deuxième vitesse électrique (pignons 41 et 61).

Le débrayage du mécanisme 10 peut se faire un peu avant l'arrêt du véhicule, afin d'amener le moteur thermique à une vitesse nulle avant l'arrêt complet du véhicule.

Le mode de réalisation qui vient d'être décrit possède seulement deux vitesses thermiques et deux vitesses électriques.

Il va de soi que ce nombre pourrait être différent, notamment pour les vitesses thermiques, où on pourrait prévoir trois, quatre ou cinq vitesses, grâce à la mise en oeuvre d'un ou de plusieurs jeux de pignons additionnels à la suite des pignons 30-50 et 31-51.

Par ailleurs, on notera que les pignons de commande de la marche arrière, qui peuvent être de type classique, n'ont pas été représentés sur les dessins afin de pas les compliquer inutilement.

## Revendications

1. Boîte de vitesses mécanique en ligne, pour véhicule à propulsion hybride avec deux types de moteur, la propulsion étant réalisée à partir d'un moteur thermique (1) et/ou d'un moteur électrique (2), qui comporte des lignes primaire **(XX')** et secondaire **(YY')** parallèles, à savoir une ligne primaire **(XX')** motrice et une ligne secondaire **(YY')** réceptrice du mouvement, laquelle entraîne un différentiel (7) qui commande les roues motrices du véhicule, **caractérisé par le fait que** :
- la ligne primaire (**XX'**) est constituée d'un arbre menant principal (3) entraîné en rotation par le moteur thermique (1) via un embrayage (10) et d'un arbre menant auxiliaire tubulaire (4) qui entoure coaxialement l'arbre menant principal (3) et qui est entraîné par le moteur électrique (2), ces deux arbres (3, 4) étant mutuellement libres en rotation ;
- l'arbre menant principal (3) porte au moins une paire de pignons (30, 31) de diamètres différents, dont il est solidaire en rotation ;
- l'arbre menant auxiliaire (4) porte au moins une paire de pignons (40, 41) de diamètres différents, dont il est solidaire en rotation ;
- la ligne secondaire (**YY'**) est constituée d'un arbre mené principal (5) et d'un arbre mené auxiliaire tubulaire (6), entourant coaxialement l'arbre mené principal (5), chacun de ces deux arbres menés (5, 6) portant un pignon de sortie (52 ; 62) qui est en prise avec la denture (80 ; 81) de la couronne du différentiel ;
- l'arbre mené principal (5) comporte au moins une paire de pignons fous (50, 51) qui sont chacun en prise avec l'un des pignons (30, 31) de l'arbre menant principal (3), un baladeur (53) permettant de solidariser sélectivement en rotation l'un de ces pignons fous (50, 51) avec l'arbre mené principal (5) ;
- l'arbre mené auxiliaire (6) comporte au moins une paire de pignons fous (60, 61) qui sont chacun en prise avec l'un des pignons (40, 41) de l'arbre menant auxiliaire (4), un baladeur (63) permettant de solidariser sélectivement l'un de ces pignons fous (60, 61) avec l'arbre mené auxiliaire (6).

## Patentansprüche

1. Parallelwellengetriebe für Fahrzeuge mit Hybridantrieb mit zwei Motorarten, wobei der Antrieb ausgehend von einem Verbrennungsmotor (1) und/oder einem Elektromotor (2) geleistet wird, wobei das Getriebe eine Primärleitung **(XX')** und eine parallel liegende Sekundärleitung **(YY')** aufweist, nämlich eine primäre Antriebsleitung **(XX')** und eine sekundäre Leitung **(YY')** zur Aufnahme der Bewegung, welche ein Ausgleichgetriebe (7) antreibt, das die Antriebsräder des Fahrzeugs steuert, **dadurch gekennzeichnet, dass**:
- die Primärleitung **(XX')** von einer Hauptantriebswelle (3), die von dem Verbrennungsmotor (1) über eine Kupplung (10) in Drehung angetrieben wird, und einer röhrenförmigen Nebenantriebswelle (4) gebildet ist, welche die Hauptantriebswelle (3) koaxial umgibt, und welche von dem Elektromotor (2) angetrieben wird, wobei diese beiden Wellen (3, 4) voneinander unabhängig in der Drehung sind;
- die Hauptantriebswelle (3) wenigstens ein Paar Ritzel (30, 31) mit unterschiedlichen Durchmessern trägt, mit denen sie in Drehung einstückig ausgebildet ist;
- die Nebenantriebswelle (4) wenigstens ein Paar Ritzel (40, 41) mit unterschiedlichen Durchmessern trägt, mit denen sie in Drehung einstückig ausgebildet ist;
- die Sekundärleitung (**YY'**) von einer Hauptabtriebswelle (5) und einer röhrenförmigen Nebenabtriebswelle (6) gebildet ist, welche die Hauptabtriebswelle (5) koaxial umgibt, wobei jede dieser beiden Abtriebswellen (5, 6) ein Ausgangsritzel (52; 62) trägt, das sich im Eingriff mit der Zahnung (80; 81) des Kranzes des Ausgleichgetriebes befindet;
- die Hauptabtriebswelle (5) wenigstens ein Paar lose Ritzel (50, 51) aufweist, die sich jeweils im Eingriff mit einem der Ritzel (30, 31) der Hauptantriebswelle (3) befinden, wobei eine Schiebewelle (53) ermöglicht, selektiv in Drehung eines dieser losen Ritzel (50, 51) mit der Hauptabtriebswelle (5) einstückig auszubilden;
- die Nebenabtriebswelle (6) wenigstens ein Paar lose Ritzel (60, 61) aufweist, die sich jeweils im Eingriff mit einem der Ritzel (40, 41) der Nebenantriebswelle (4) befinden, wobei eine Schiebewelle (63) ermöglicht, selektiv eines dieser losen Ritzel (60, 61) mit der Nebenabtriebswelle (6) einstückig auszubilden.

## Claims

1. An in-line mechanical gear box for a vehicle with hybrid propulsion having two types of motive power, propulsion being provided by a combustion engine (1) and/or an electric motor (2), the gear box comprising parallel primary and secondary lines (XX', YY'), namely an input primary line (XX') and an output secondary line (YY'), which output line drives a differential (7) controlling the driving wheels of the vehicle, the gear box being **characterized by** the facts that:
· the primary line (XX') is constituted by a main drive shaft (3) driven by the engine (1) via a clutch (10) and an auxiliary drive shaft (4) that is tubular, surrounding the main drive shaft (3) coaxially and driven by the electric motor (2), these two shafts (3, 4) being free to rotate relative to each other;
· the main drive shaft (3) carries at least one pair of gearwheels (30, 31) of different diameters, and constrained to rotate therewith;
· the auxiliary drive shaft (4) carries at least one pair of gearwheels (40, 41) of different diameters, and is constrained to rotate together therewith;
· the secondary line (YY') is constituted by a main driven shaft (5) and an auxiliary driven shaft (6) that is tubular, surrounding the main driven shaft (5) coaxially, each of these two driven shafts (5, 6) carrying an outlet gearwheel (52; 62) which meshes with the teeth (80; 81) of the ring of the differential;
· the main driven shaft (5) has at least one pair of gearwheels (50, 51) mounted loose, each of which meshes with one of the gearwheels (30, 31) of the main drive shaft (3), a sliding shaft (53) enabling a selected one of said loose gearwheels (50, 51) to be constrained to rotate with the main driven shaft (5); and
· the auxiliary driven shaft (6) has at least one pair of gearwheels (60, 61) mounted loose, each meshing with a respective one of the gearwheels (40, 41) of the auxiliary drive shaft (4), a sliding shaft (63) enabling a selected one of said loose gar wheels (60, 61) to be constrained to rotate with the auxiliary driven shaft (6).
